# FASCICULE DE BREVET EUROPEEN

(11) **EP 0 548 436 B1**
(45) Date de publication et mention de la délivrance du brevet: **11.09.1996**
(21) Numéro de dépôt: 91450012.9
(22) Date de dépôt: 20.12.1991
(51) Int. Cl.: A01G 13/02

(54) **Dispositif de ramassage de paillage sous forme de film plastique**
Vorrichtung zum Sammeln von bodenbedeckender Plastikfolie
Device for collecting plastic foil covering soil

(43) Date de publication de la demande: 30.06.1993
(73) Titulaire: Drouaire, Jean-Claude, F-47160 Damazan (FR)
(72) Inventeur: Drouaire, Jean-Claude, F-47160 Damazan (FR)
(74) Mandataire: Hammond, William

(56) Documents cités:
- FR-A- 2 423 973
- FR-A- 2 562 382
- FR-A- 2 663 188
- US-A- 3 175 621
- US-A- 3 234 691
- MOTORISATION & TECHNIQUE AGRICOLE. no. 109, Janvier 1988, PARIS FR page 18; GAILLARD: 'RECUPERATION DES FILMS PLASTIQUES EN AGRICULTURE'

## Description

La présente invention est relative à un dispositif tracté pour le ramassage de paillage sous forme de film plastique utilisé notamment en agriculture.

On sait qu'après récolte, l'agriculteur qui a utilisé un paillage sous forme de film plastique doit retirer ce dernier pour pouvoir travailler à nouveau le sol sans le saturer d'éléments indestructibles, ce retrait s'effectue manuellement ce qui présente le désavantage d'être laborieux et malaisé car le film plastique ramassé en vrac est volumineux, d'autre part il supporte mal le vieillissement qui est accéléré durant son exposition à tous les temps le rendant cassant.

On connaît aussi par le brevet FR 2 423 973, un appareil de ramassage de paillage s'adaptant à l'arrière d'un tracteur, ce dernier est doté d'un tambour transversal à l'intérieur duquel est maintenue une série de dents articulées sur un axe désaxé par rapport à l'axe du tambour et ce de manière à provoquer, lors de la rotation dudit tambour au moyen d'une transmission par chaîne elle-même entrainée par un moto-réducteur relié à la prise de force du tracteur, la mise en saillie des dents à l'aplomb du sol de sorte à récupérer le paillage, ledit paillage étant entraîné vers l'arrière du tambour et déposé sur une rampe transporteuse entraînée par la transmission par chaîne et évacué dans une remorque. Ce type d'appareil n'est pas fiable, il présente au moins un inconvénient au niveau du ramassage du paillage qui est déchiqueté par les dents étant donné qu'il n'est pas possible d'obtenir une rotation du tambour support de dents présentant une longueur développée identique à la longueur du déplacement de l'appareil compte tenu de l'entraînement au moyen d'un moto-réducteur relié à la prise de force du tracteur, la longueur développée durant la rotation du tambour est soit plus importante que la longueur de déplacement de l'appareil ce qui provoque le déchiquetage du film jusqu'à sa rupture nécessitant une surveillance accrue pour effectuer la reprise de ramassage, ou inférieure au déplacement dudit appareil ce qui provoque des bourrages.

L'invention a pour but de pallier aux inconvénients précédemment exposés.

L'invention a pour objet un dispositif tracté de ramassage de paillage sous forme de film plastique s'adaptant à l'attelage trois-points d'un tracteur, ledit dispositif comportant un chassis reposant au sol par l'intermédiaire de deux roues et sur lequel est maintenu entre les longerons un tambour cylindrique rotatif à l'intérieur duquel sont contenues des séries de doigts disposés en étoile et répartis sur sa largeur, lesdites séries étant solidaires d'un arbre maintenu à l'intérieur dudit tambour de manière désaxée de telle sorte que, durant la rotation du tambour à l'inverse de la rotation des roues provoquée au moyen d'une transmission à chaîne par exemple, lesdits doigts dirigés et passant au travers de la surface cylindrique du tambour soient saillants à l'aplomb du sol afin d'enfourcher le film plastique pour l'entraîner durant la rotation du tambour vers l'arrière du dispositif où un enrouleur est aménagé, le film plastique au niveau de l'enrouleur étant désemparé des doigts grâce à leur retrait de la surface latérale du tambour, le paillage récupéré étant enroulé sur un mandrin expansible disposé à l'arrière du tambour.

D'autres caractéristiques et avantages de l'invention ressortiront plus clairement de la description qui va suivre faite en regard des dessins joints donnés à titre d'exemple non limitatif, où :
- la figure 1 est une vue de côté du dispositif,
- la figure 2, une vue de dessus du dispositif,
- la figure 3, une vue en coupe transversale du tambour.
- la figure 4, une vue en coupe longitudinale du tambour.
- la figure 5, une vue en coupe longitudinale du mandrin demi ouvert ou fermé recevant le paillage,
- la figure 6, une vue en coupe du mandrin en position ouverte ou fermée.

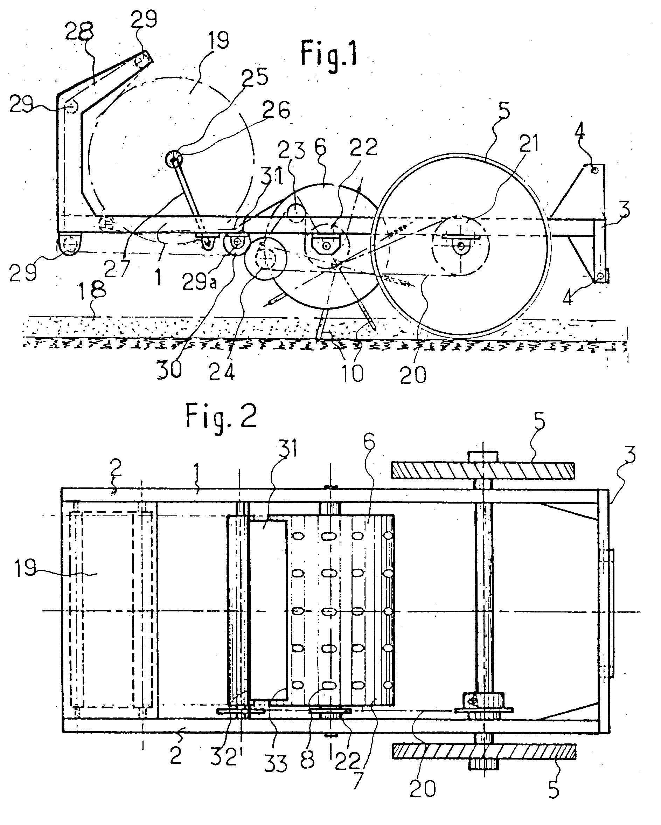

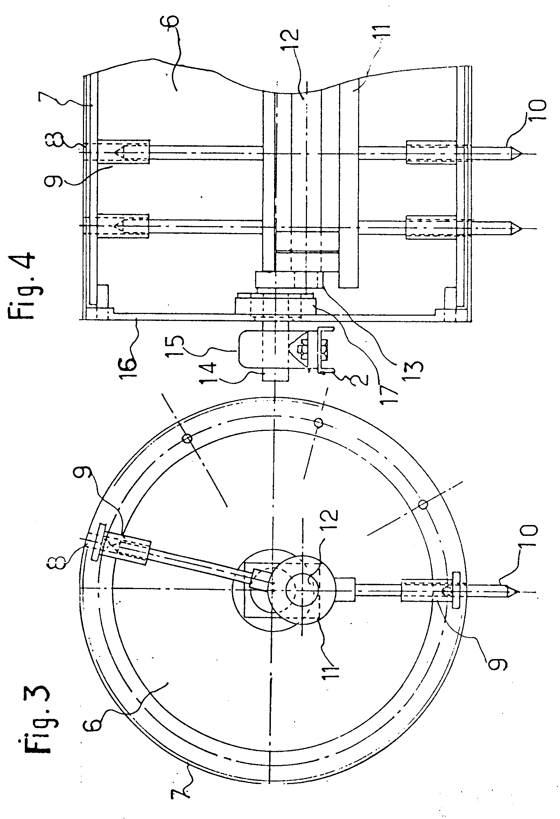

Tel que représenté figures 1 à 4, le dispositif de ramassage comporte un chassis 1 doté de longerons 2 reliés à l'avant par une traverse 3 sur laquelle sont aménagés les ancrages 4 pour l'attelage trois-points d'un tracteur, sous les longerons 2 sont fixées les roues 5 reposant au sol et un tambour cylindrique rotatif 6 dont la surface cylindrique 7 est dotée d'évidements 8 prolongés intérieurement par des conduits 9 servant de guides à des doigts 10 coulissant dans lesdits conduits 9, les doigts 10 étant répartis en étoile et solidaires d'un manchon 11 rotatif enfilé sur un arbre 12, ce dernier est maintenu en ses extrémités sur des flasques 13 prolongeant à l'intérieur du tambour les axes 14 reliés aux longerons 2 par des paliers 15 et sur lesquels sont maintenus les côtés 16 du tambour 6 au moyen de roulements ou paliers 17, l'arbre 12 par rapport à l'axe du tambour et/ou des axes 14 est maintenu de manière décalé afin de constituer un excentrique entre les doigts 10 et la surface cylindrique 7 du tambour 6 et notamment pour que les doigts 10 orientés vers le sol durant la rotation du tambour 6 soient saillants pour pénétrer et enfourcher le film plastique 18 afin de l'entraîner vers l'arrière du chassis 1 où un enrouleur 19 à courroies 28 est aménagé pour récupérer ledit film durant le déplacement du dispositif, les doigts 10 opposés aux doigts saillants orientés vers le sol étant en retrait par rapport à la surface cylindrique 7 du tambour 6 de manière à désemparer le film plastique 18 pour permettre son enroulement, la position en retrait et saillante des doigts 10 s'effectuant progressivement durant la rotation du tambour 6. La rotation du tambour 6 est obtenue au moyen d'une transmission par chaîne 20 tendue entre des pignons 21, 22, 23 et 24 solidaire d'une des roues 5, du tambour 6 et d'un longeron 2, elle s'effectue de manière inverse à celle des roues 5 et le rapport des pignons est tel qu'il provoque durant la rotation une longueur développée du tambour 6 identique à la longueur développée des roues 5 de sorte à avoir un ramassage constant et linéaire du film plastique 18 durant le déplacement du dispositif.

Le film 18 récupéré et désemparé des doigts 10, en la partie arrière du chassis 1, est enroulé sur un mandrin rotatif 25, celui-ci en ses extrémités 26 est solidaire de bras articulés 27 sur les longerons 2 du chassis 1, la rotation du mandrin 25 et de ce fait l'enroulement du film plastique 18 autour dudit mandrin 25 est obtenu au moyen de l'enrouleur 19 doté de courroies 28 tendues sur des arbres rotatifs 29 dont l'un, l'arbre 29a, est entraîné par une transmission à chaîne 30 entraînée elle-même par la rotation de la transmission 20.

Afin d'éviter le bourrage en cas de rupture du film 18 entre le tambour 6 et l'enrouleur 19, un déflecteur 31 est maintenu sur un arbre rotatif 32, son extrémité 33 parallèle à la surface latérale du tambour 6 s'appuyant au fur et à mesure de la rotation du tambour 6 sur ses génératrices ce qui a pour effet de nettoyer la surface latérale 7 dudit tambour (6).

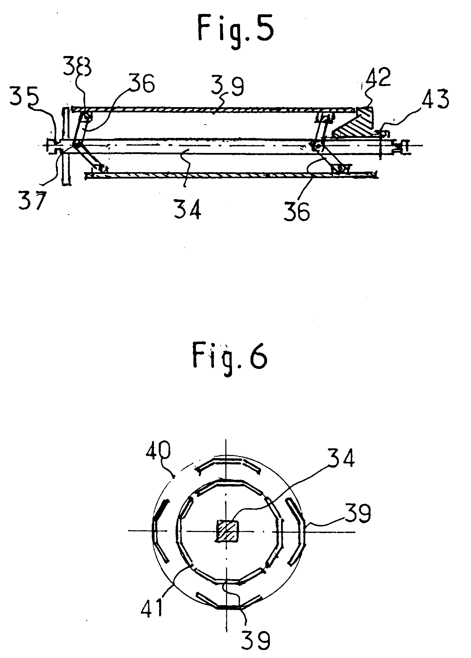

Tel que représenté figures 5 et 6, afin de faciliter l'extraction de la bobine de film plastique récupéré, le mandrin 25 se compose d'un arbre 34 généralement de section carrée présentant des encoches 35 de guidage en ses extrémités recevant l'extrémité 26 des bras articulés 27, sur les faces latérales dudit arbre 34, des biellettes 36 sont maintenues articulées au moyen d'axes 37 en une extrémité sur chaque face de l'arbre 34, leur autre extrémité étant articulée sur un axe 38 solidaire d'éléments formés 39 longitudinaux répartis sur le pourtour dudit arbre 34, lesdits éléments formés 39 permettant au moyen des bielles 36 de réaliser un mandrin à deux positions comme représenté figure 6, notamment une position ouverte 40 permettant de recevoir le film plastique récupéré et une position fermée 41 pour l'extraction du rouleau réalisé lors du ramassage dudit film plastique aprés désemparage des bras 27 ; la position ouverte 40 étant obtenue au moyen d'un moyeu amovible 42 comme représenté figure 5, la position fermée 41 étant obtenue lors de l'extraction du moyeu 42, ce dernier en position ouverte 40 est immobilisé par une goupille 43.

## Revendications

1. Dispositif de ramassage de paillage sous forme de film plastique s'adaptant à l'attelage trois-points d'un tracteur comportant un chassis (1) reposant au sol par l'intermédiaire de deux roues (5), un tambour cylindrique rotatif (6) étant maintenu sur les longerons (2) et à l'intérieur duquel sont contenues des séries de doigts (10) disposés en étoile et enfilés sur un arbre (12) maintenu désaxé afin de constituer un excentrique qui durant le déplacement du chassis (1) et la rotation du tambour (6) dispose les doigts (10) orientés vers le sol de manière saillante pour récupérer le film plastique tandis qu'à l'opposé lesdits doigts (10) sont en retrait du tambour (6) libérant le film plastique qui repose sur la surface cylindrique du tambour (6), caractérisé en ce que le film plastique entraîné vers l'arrière et reposant sur la surface cylindrique du tambour (6) est enroulé en continu autour d'un mandrin rotatif (25) au moyen de courroies mobiles (28) tendues sur des arbres rotatifs (29) et dont l'un est entraîné par une transmission à chaîne (30) elle-même entraînée par la transmission (20) raccordée à une des roues (5) engendrant la rotation du tambour (6) durant le déplacement du chassis (1), la longueur développée du tambour (6) durant la rotation étant identique à la longueur développée des roues (5).

2. Dispositif tracté de ramassage de paillage sous forme de film plastique selon la revendication 1, caractérisé en ce que les doigts (10) au travers de la surface cylindrique (7) du tambour (6) sont chacun dirigés par des conduits (9).

3. Dispositif tracté de ramassage de paillage sous forme de film plastique selon la revendication 1, caractérisé en ce qu'intermédiairement entre le tambour (6) et l'enrouleur (19) un déflecteur (31) est maintenu sur un arbre rotatif (32), son extrémité (33) parallèle à la surface cylindrique (7) du tambour (6) s'appuyant au fur et à mesure de la rotation dudit tambour (6) sur ses génératrices afin d'éviter un bourrage en cas de rupture du film (18) et d'autre part engendrer le nettoyage de la surface cylindrique (7) du tambour (6).

4. Dispositif tracté de ramassage de paillage sous forme de film plastique selon la revendication 1, caractérisé en ce que le mandrin rotatif (25) est constitué d'un arbre (34) de section carrée sur les faces latérales duquel sont maintenues articulées des biellettes (36) reliées à des éléments formés (39) engendrant au moyen d'un moyeu amovible (42) une position ouverte (40) du mandrin (25) lors de sa mise en place sur l'arbre (34) ou par extraction du moyeu (42) une position fermée (41).

5. Dispositif tracté de ramassage de paillage sous forme de film plastique selon la revendication 4, caractérisé en ce que le moyeu amovible (42) est immobilisé sur l'arbre (34) au moyen d'une goupille (43).

6. Dispositif tracté de ramassage de paillage sous forme de film plastique selon les revendications 1 et 4, caractérisé en ce qu'en position ouverte (40) du mandrin, le film plastique récupéré est enroulé durant le ramassage tandis qu'en position fermée (41) le mandrin (25) désemparé des bras (27) permet d'extraire le rouleau de film plastique constitué.

## Claims

1. A device for collecting straw in form of a plastic film adaptable to a three-point linkage of a tractor comprising a chassis (1) resting on the floor by means of two wheels (5), a rotating cylindrical cylinder (6) being held on the girders (2) and in the inner part of which series of fingers (10) are arranged as a star and are passed on a spindle (12), which is held offset so as to constitute an eccentric, which arranges the fingers (10) orientated towards the bottom so as to be projecting during the motion of the chassis (1) and the rotation of the cylinder (6) to recover the plastic film while, on the other side, said fingers (10) stand back from the cylinder (6) and release the plastic film which rests on the cylindrical surface of the cylinder (6), characterized in that the plastic film, which is driven backwards and which rests on the cylindrical surface of the cylinder (6), is continually rolled up around a rotating mandrel (25) by means of mobile belts (28) tight on rotating spindles (29), one of which being driven by a chain drive (30), which is itself driven by the drive (20) connected to one of the wheels (5) generating the rotation of the cylinder (6) during the motion of the chassis (1), the evolute of the cylinder (6) during the rotation being identical to the evolute of the wheels (5).

2. A drawn device for collecting straw in form of a plastic film according to claim 1, characterized in that the fingers (10) are directed through the cylindrical surface (7) of the cylinder (6), each one through a pipe (9).

3. A drawn device for collecting straw in form of a plastic film according to claim 1, characterized in that a defector (31) is held intermediately between the cylinder (6) and the winder (19) on a rotating spindle (32), the end (33) thereof which is parallel to the cylindrical surface (7) of the cylinder (6) bearing as and when said cylinder (6) is rotating on its generators so as to avoid tamping in case of tearing of the film (18) and, on the other hand, so as to generate the cleaning of the cylindrical surface (7) of the cylinder (6).

4. A drawn device for collecting straw in form of a plastic film according to claim 1, characterized in that the rotating mandrel (25) consists of a spindle (34) with a square section on the lateral sides of which articulated connecting rods (36) are held which are connected to moulded elements (39) so as to generate, by means of a removable hub (42), an open position (40) of the mandrel (25) when mounting it on the spindle (34) or a closed position (41) when removing the hub (42).

5. A drawn device for collecting straw in form of a plastic film according to claim 4, characterized in that the removable hub (42) is locked on the spindler (34) by means of a pin (43).

6. A drawn device for collecting straw in form of a plastic film according to the claims 1 to 4, characterized in that, in the open position (40) of the mandrel, the plastic film which has been recovered, is rolled up during collecting, while, in the closed position (41), the mandrel (25) is separated from the arms (27) so as to enable the extraction of the constituted roll of plastic film.

## Patentansprüche

1. Vorrichtung zum Einsammeln von Streu in Form von Kunststofffolie zum Anschluß an die Dreipunktkupplung eines Traktors, bestehend aus einem Gestell (1), das über zwei Räder (5) auf dem Boden aufliegt, einer rotierenden zylindrischen Walze (6), die auf den Längsträgern (2) ruht und in deren Innerem sich Reihen von Zapfen (10) befinden, die sternförmig angeordnet und auf einer Welle (12) aufgereiht sind, die versetzt angeordnet ist, um einen Exzenter zu bilden, der während der Bewegung des Gestells (1) und der Rotation der Walze (6) die zum Boden gerichteten Zapfen (10) hervorstehen läßt, um die Kunststofffolie einzusammeln, während diese Zapfen (10) auf der entgegengesetzten Seite in die Walze (6) eingezogen sind und die Kunststofffolie freisetzen, der auf der zylindrischen Oberfläche der Walze (6) aufliegt, dadurch gekennzeichnet, daß die nach hinten bewegte und auf der zylindrischen Oberfläche der Walze (6) aufliegende Kunststofffolie mittels beweglicher Treibriemen (28), die auf rotierende Wellen (29) gespannt sind, kontinuierlich um einen rotierenden Dorn (25) aufgerollt wird, wobei eine der Wellen (29) durch ein Kettengetriebe (30) angetrieben wird, das seinerseits durch das Getriebe (20) angetrieben wird, das an eines der Räder (5) angeschlossen ist, die die Rotation der Walze (6) während der Bewegung des Gestells (1) bewirken, wobei die Länge der Evolvente der Walze (6) während der Rotation der Länge der Evolvente der Räder (5) gleich ist.

2. Gezogene Vorrichtung zum Einsammeln von Streu in Form von Kunststofffolie nach Patentanspruch 1, dadurch gekennzeichnet, daß die Zapfen (10) jeweils durch eine Leitung (9) durch die zylindrische Oberfläche (7) der Walze (6) gerichtet werden.

3. Gezogene Vorrichtung zum Einsammeln von Streu in Form von Kunststofffolie nach Patentanspruch 1, dadurch gekennzeichnet, daß zwischen der Walze (6) und dem Aufroller (19) ein Ablenker (31) auf einer rotierenden Welle (32) gehalten wird, dessen zur zylindrischen Oberfläche (7) der Walze (6) paralleles Ende (33) sich entsprechend der Rotation dieser Walze (6) an deren Mantellinien anlegt, um im Falle des Reißens der Folie (18) einen Stau zu vermeiden und andererseits eine Reinigung der zylindrischen Oberfläche (7) der Walze (6) zu bewirken.

4. Gezogene Vorrichtung zum Einsammeln von Streu in Form von Kunststofffolie nach Patentanspruch 1, dadurch gekennzeichnet, daß der rotierende Dorn (25) aus einer Welle (34) mit quadratischem Querschnitt besteht, auf deren Seitenflächen Schwingarme (36) angelenkt sind, die mit geformten Teilen (39) verbunden sind, die mittels einer abnehmbaren Nabe (42) eine offene Stellung (40) des Dorns (25) beim Einsetzen der Welle (34) oder bei Entnahme der Nabe (42) eine geschlossene Stellung (41) bewirken.

5. Gezogene Vorrichtung zum Einsammeln von Streu in Form von Kunststofffolie nach Patentanspruch 4, dadurch gekennzeichnet, daß die abnehmbare Nabe (42) mittels eines Stiftes (43) auf der Welle (34) befestigt wird.

6. Gezogene Vorrichtung zum Einsammeln von Streu in Form von Kunststofffolie nach den Patentansprüchen 1 und 4, dadurch gekennzeichnet, daß die eingesammelte Kunststofffolie in der offenen Stellung (40) des Dorns während des Einsammelns aufgerollt ist, während der Dorn (25) in der geschlossenen Stellung (41) von den Armen (27) gelöst ist und es ermöglicht, die erzeugte Rolle aus Kunststofffolie zu entnehmen.
